# EUROPÄISCHE PATENTSCHRIFT

(11) **EP 2 411 655 B1**
(45) Veröffentlichungstag und Bekanntmachung des Hinweises auf die Patenterteilung: **26.12.2012**
(21) Anmeldenummer: 10701873.1
(22) Anmeldetag: 29.01.2010
(51) Int. Cl.: F02M 37/22, F02M 37/00, F01N 5/02

(54) **VORRICHTUNG UND VERFAHREN ZUM TROCKNEN VON KRAFTSTOFF, INSBESONDERE FÜR EIN KRAFTFAHRZEUG**
APPARATUS AND METHOD FOR DRYING FUEL, IN PARTICULAR FOR A MOTOR VEHICLE
DISPOSITIF ET PROCÉDÉ D'ASSÈCHEMENT DE COMBUSTIBLE, EN PARTICULIER POUR UN VÉHICULE AUTOMOBILE

(30) Priorität: 27.03.2009 DE 102009001925
(43) Veröffentlichungstag der Anmeldung: 01.02.2012
(73) Patentinhaber: Robert Bosch GmbH, 70442 Stuttgart (DE)
(72) Erfinder: HAAS, Volker, 71732 Tamm (DE); BARUNOVIC, Robert, 70839 Gerlingen (DE)
(86) Internationale Anmeldenummer: PCT/EP2010/051092
(87) Internationale Veröffentlichungsnummer: WO 2010/108715

(56) Entgegenhaltungen:
- EP-A2- 1 126 158
- DE-A1- 10 160 497
- DE-A1- 10 334 042
- US-B1- 6 170 470

## Beschreibung

### Stand der Technik

Die Erfindung betrifft eine Vorrichtung und ein Verfahren zum Trocknen von Kraftstoff, insbesondere für ein Kraftfahrzeug.

Diesel-Einspritzkomponenten stellen relativ hohe Ansprüche an die Qualität des Dieselkraftstoffes. Wenn im Dieselkraftstoff ungelöstes Wasser vorhanden ist, so fallen diese Komponenten aufgrund der damit reduzierten Schmierfähigkeit des Dieselkraftstoffes innerhalb relativ kurzer Zeit aus. Bisher wurde versucht, durch die Verwendung von Beschichtungen oder speziellen Materialpaarungen an den Diesel-Einspritzkomponenten den Betrieb auch mit relativ schlecht schmierenden Kraftstoffen zu verbessern bzw. zu gewährleisten. Beide Maßnahmen sind relativ teuer.

Auch ist es bekannt, dass die Korrosion von Stahl in mit ethanolhaltigen Ottokraftstoffen durchflossenen Benzineinspritzsystemen zunimmt. Auch hier sind somit zusätzliche korrosionshemmende Maßnahmen erforderlich, wenn eine hohe Lebensdauer der Komponenten erzielt werden soll. Insgesamt gesehen führt somit Wasser im Kraftstoff, sei es nun Dieselkraftstoff oder ethanolhaltiger Ottokraftstoff, zu einem deutlichen Anstieg der Verschleißrate an den mit ihnen in Kontakt befindlichen Komponenten.

Aus der DE 10 2005 035 782 A1 ist es bekannt, ein Trockenmittel im Abgasstrom eines Kraftfahrzeugs zu verwenden, das das im Abgas vorhandene Wasser bzw. den im Abgas vorhandenen Wasserdampf bei niedrigen Abgastemperaturen aufnimmt und bei höheren Abgastemperaturen unsichtbar wieder an die Umgebungsluft abgibt. Die, DE 10160497 beschreibt eine Vorrichtung und ein Verfahren gemäβ dem Oberbegriff der Ansprüche 1 und 9.

### Offenbarung der Erfindung

Die Erfindung hat es sich daher als Aufgabe gestellt, eine Vorrichtung und ein Verfahren bereitzustellen, welche es ermöglichen, die in dem Kraftstoff befindliche Feuchtigkeit, insbesondere Wasser zu entfernen. Gleichzeitig sollen die Vorrichtung bzw. das Verfahren es ermöglichen, dass das Trocknen des Kraftstoffs als regenerativer Vorgang erfolgt, so dass das verwendete Trockenmittel, selbst bei einer relativ geringen Menge, über einen langen Zeitraum hinweg immer wieder verwendet werden kann. Im Idealfall bedeutet dies, dass ein und dasselbe Trockenmittel für die Gesamtmenge an Kraftstoff, die beispielsweise ein Verbrennungsmotor während seiner Gesamtbetriebsdauer benötigt, verwendet werden kann, ohne dass es ausgetauscht oder ergänzt werden muss. Diese Aufgabe wird bei einer Vorrichtung und einem Verfahren mit den Merkmalen der unabhängigen Ansprüche gelöst. Der Erfindung liegt dabei das Prinzip zugrunde, dass es Trockenmittel gibt, die Feuchtigkeit, insbesondere Wasser bzw. Wasserdampf bei einer Temperatur unter einer so genannten Regenerationstemperatur aus der Luft aufnehmen und diese Feuchtigkeit bei Temperaturen oberhalb der Regenerationstemperatur wieder an die Umgebungsluft abgeben. Diese Kenntnis wird kombiniert mit dem Henryschen Gesetz, wonach der Wassergehalt in einer Flüssigkeit (hier: Kraftstoff) von dem Feuchtegehalt der über der Flüssigkeit befindlichen Luft abhängt, derart, dass bei einem Trocknen der Luft oberhalb der Flüssigkeit der Feuchtegehalt in der Flüssigkeit ebenfalls abnimmt. Somit wird ein Trocknen des Kraftstoffs, insbesondere ein Entfernen von Wasser aus dem Kraftstoff dadurch bewirkt, dass die über dem Kraftstoff befindliche Luft mittels des Trockenmittels getrocknet wird.

Vorteilhafte Weiterbildungen der erfindungsgemäßen Vorrichtung und des erfindungsgemäßen Verfahrens zum Trocknen von Kraftstoff, insbesondere für ein Kraftfahrzeug, sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Um zu verhindern, dass während der Regenerationsphase des Trockenmittels die vom Trockenmittel an die Umgebungsluft abgegebene Feuchtigkeit wieder in Richtung des Kraftstoffbehälters strömt und somit den Wassergehalt im Kraftstoff wieder erhöht, ist es in einer vorteilhaften Weiterbildung vorgesehen, dass der Vorratsbehälter eine Eintrittsöffnung aufweist, in der die Verbindung mündet, und dass die Eintrittsöffnung mit einem Einlassventil verschließbar ist.

Besonders bevorzugt ist es, wenn der Vorratsbehälter eine Austrittsöffnung aufweist, und dass die Austrittsöffnung mit einem Auslassventil verschließbar ist. Dadurch wird es ermöglicht, dass die Feuchtigkeit lediglich in der Regenerationsphase an die Umgebungsluft abgegeben wird und, dass andererseits das Einströmen von Umgebungsluft, welche vom Trockenmittel ebenfalls getrocknet werden würde, vermieden wird. Somit wird die vorhandene Menge an Trockenmittel in vorteilhafter Weise ausschließlich zum Trocknen des Kraftstoffs verwendet.

In einer weiteren vorteilhaften Ausgestaltung ist es vorgesehen, dass die Heizeinrichtung Teil einer Abgasleitung eines Verbrennungsmotors ist. Dadurch lassen sich der bauliche Aufwand und somit die Kosten der Vorrichtung reduzieren, da auf eine separate Heizeinrichtung verzichtet werden kann.

Wenn darüber hinaus die Abgasleitung in direktem Anlagekontakt mit dem Vorratsbehälter angeordnet ist, wird auf einfache Art und Weise ein direkter Wärmeübergang in das Trockenmittel erzielt, was den baulichen Aufwand zusätzlich verringert.

Um selbst bei einem Ausfall von beispielsweise elektrischen Versorgern für die Ventile oder sonstigen Störungen ein Trocknen des Kraftstoffs zu ermöglichen und es gleichzeitig zu vermeiden, dass Umgebungsluft an das Trockenmittel gerät, ist es vorteilhaft, wenn das Einlassventil bei Temperaturen unterhalb der Regenerationstemperatur als selbstständig offenes Ventil und das Auslassventil bei Temperaturen unterhalb der Regenerationstemperatur als selbstständig geschlossenes Ventil ausgebildet ist.

Um eine größtmögliche Kontaktfläche für das Trockenmittel in dem Vorratsbehälter für die zu trocknende Luft bereitzustellen, ist es darüber hinaus in einer vorteilhaften Weiterbildung vorgesehen, dass der Vorratsbehälter nur teilweise mit dem Trockenmittel befüllt ist, so dass im Vorratsbehälter ein Freiraum ohne Trockenmittel ausgebildet ist.

Ebenso ist es vorteilhaft, wenn im Kraftstoffbehälter oberhalb des Kraftstoffpegels ein Freiraum ausgebildet ist. Dadurch wird eine große Feuchtigkeitsaustauschfläche zwischen dem Kraftstoff und der über dem Kraftstoff befindlichen Luft geschaffen.

Zur Optimierung des Betriebes ist es bei dem erfindungsgemäßen Verfahren in einer besonders bevorzugten Ausführung vorgesehen, dass in einer ersten Betriebsphase, bei der die Feuchtigkeit vom Trockenmittel aufgenommen wird, ein in einer Verbindung zwischen dem Vorratsbehälter und dem Kraftstoffbehälter geschaltetes Einlassventil geöffnet ist, während ein den Vorratsbehälter mit der Umgebungsluft verbindendes Auslassventil geschlossen ist, und dass in einer zweiten Betriebsphase, bei der das Trockenmittel die Feuchtigkeit wieder abgibt, das Einlassventil geschlossen und das Auslassventil geöffnet ist.

Weitere Vorteile, Merkmale und Einzelheiten der Erfindung ergeben sich aus der nachfolgenden Beschreibung bevorzugter Ausführungsbeispiele sowie anhand der Zeichnung.

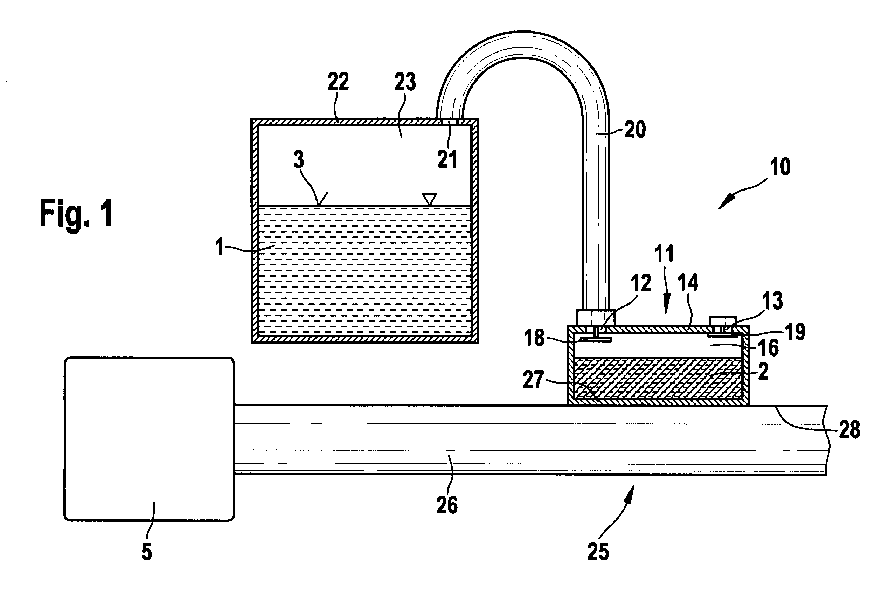

Diese zeigt in der einzigen Figur
- Fig. 1: eine Vorrichtung zum Trocknen von Kraftstoff in einer vereinfachten schematischen Darstellung.

Die in Fig.1 dargestellte Vorrichtung 10 dient zum Trocknen von Kraftstoff 1, insbesondere für ein Kraftfahrzeug. Unter Kraftstoff werden hierbei die üblicherweise beim Betrieb von Kraftfahrzeugen in deren Antriebsmotoren verwendeten Ottokraftstoffe und Dieselkraftstoffe verstanden. Typischerweise enthält der Kraftstoff 1 eine bestimmte Menge an Wasser, das die Schmiereigenschaften des Kraftstoffs 1 an den mit den Komponenten der Einspritzsysteme in Kontakt geratenen Oberflächen herabsetzt und daher mittels der Vorrichtung 10 aus dem Kraftstoff 1 entfernt werden soll.

Die Vorrichtung 10 weist einen Vorratsbehälter 11 für ein Trockenmittel 2 auf. Bei dem Trockenmittel 2 handelt es sich um eine chemische Substanz, die zum Trocknen von Luft geeignet ist, das heißt, eine Substanz, die der Luft ihre Feuchtigkeit insbesondere in Form von Wasser bzw. Wasserdampf entzieht. Beispielhaft und daher nicht einschränkend seien Kieselgel, Zeolithe, Silicagel oder Calciumchlorid als geeignete Trockenmittel 2 genannt. Diese Trockenmittel 2 haben die Eigenschaft, Wasser bzw. Wasserdampf zum Beispiel bei Raumtemperatur zu absorbieren und ab einer so genannten Regenerationstemperatur wieder an die Umgebungsluft abzugeben. So geben Kieselgel und Zeolithe die zuvor absorbierte Feuchtigkeit bei Temperaturen oberhalb von 100 Grad Celsius, Caliciumchlorid hingegen erst bei Temperaturen oberhalb von 250 Grad Celsius wieder an die Umgebungsluft ab. Mittels dieses Effekts kann das Trockenmittel 2 regeneriert, das heißt ständig wieder verwendet werden, was bei der Vorrichtung 10 ausgenutzt wird.

Der Vorratsbehälter 11 weist zumindest zwei Öffnungen auf, eine Eintrittsöffnung 12 und eine Austrittsöffnung 13. Die Öffnungen sind in einer oberen Wand 14 des Vorratsbehälters 10 ausgebildet, wobei das Trockenmittel 2 im Vorratsbehälter 11 diesen nicht vollständig ausfüllt, sondern ein erster Freiraum 16 zwischen der Oberfläche des Trockenmittels 2 und der oberen Wand 14 verbleibt. Die Eintrittsöffnung 12 ist mittels eines Einlassventils 18 und die Austrittsöffnung 13 ist mittels eines Auslassventils 19 dicht verschließbar. Bei dem Einlassventil 18 und dem Auslassventil 19 handelt es sich beispielsweise um elektrisch ansteuerbare Ventile, wobei die Ansteuerung insbesondere über einen mit einer Steuereinrichtung verbundenen Kabelbaum des Kraftfahrzeugs erfolgt. Während das Einlassventil 18 bevorzugt stromlos offen ausgebildet ist, ist das Auslassventil 19 bevorzugt stromlos geschlossen ausgebildet.

Die Eintrittsöffnung 12 ist über eine als luftdichte Schlauchverbindung 20 ausgebildete Verbindung mit einer Öffnung 21 an einem Kraftstofftank 22 gekoppelt. Die Anordnung der Öffnung 21 ist dabei bevorzugt an einem oberen Bereich des Kraftstofftanks 22 bzw. derart, dass ein Überlaufen oder Eintreten von Kraftstoff 1 in die Öffnung 21 und die Schlauchverbindung 20 vermieden wird. Weiterhin ist es besonders vorteilhaft für den Trocknungsprozess, wenn oberhalb des Kraftstoffspiegels 3 ein zweiter Freiraum 23 im Kraftstofftank 22 verbleibt. Die Länge der Schlauchverbindung 20 ist erfindungsgemäß möglichst kurz auszubilden, ebenso sollte ein möglichst großer Querschnitt der Schlauchverbindung 20 gewählt werden, da beide Maßnahmen den Trocknungsprozess, der nachfolgend noch erläutert wird, begünstigen.

Der Vorratsbehälter 11 für das Trockenmittel 2 ist mit einer Heizeinrichtung 25 gekoppelt. Besonders bevorzugt ist vorgesehen, dass der Abgasstrang bzw. eine Abgasleitung 26 des Verbrennungsmotors 5 des Kraftfahrzeugs als Heizeinrichtung 25 wirkt. Alternativ hierzu ist es jedoch auch denkbar, den Vorratsbehälter 11 mit einer separaten, von der Abgasleitung 26 getrennten oder mit dieser verbundenen Heizeinrichtung auszustatten. Die Wärmeübertragung von der Abgasleitung 26 auf den Vorratsbehälter 11 und somit das Trockenmittel 2 erfolgt durch Wärmeübergang dadurch, dass der Vorratsbehälter 11 beispielhaft mit einer unteren Wand 27 direkt an der Wand 28 der Abgasleitung 26 anliegt.

Die Vorrichtung 10 arbeitet wie folgt, wobei davon ausgegangen wird, dass es sich bei dem Trockenmittel 2 beispielsweise um Silicagel handelt, welches eine Regenerationstemperatur von etwa 100 Grad Celsius aufweist: Bei einer Temperatur unterhalb der Regenerationstemperatur des Silicagels ist das Einlassventil 18 geöffnet, während das Auslassventil 19 geschlossen ist. Dieser Zustand tritt typischerweise beim Parken oder aber während des Warmlaufens des Verbrennungsmotors 5 auf, da die Abgasleitung 26 dabei das Trockenmittel 2 noch nicht stark erwärmt hat. Durch das Schließen des Auslassventils 19 wird dabei vermieden, dass Umgebungsluft an das Trockenmittel 2 gelangt. Durch das geöffnete Einlassventil 18 ist der Kraftstofftank 22 über die Schlauchverbindung 20 mit dem Innenraum des Vorratsbehälters 11 bzw. mit dem Trockenmittel 2 verbunden. Durch Diffusionsvorgänge gelangt das in der Luft über dem Kraftstoff 1 gespeicherte Wasser in Wirkverbindung mit dem Trockenmittel 2, welches der Luft das Wasser entzieht und in dem Trockenmittel 2 speichert. Da der Wassergehalt im Kraftstoff 1 über das Henrysche Gesetz vom Wassergehalt in der Luft über dem Kraftstoff 1 abhängt, wird beim Trocknen der Luft durch das Trockenmittel 2 gleichzeitig auch dem Kraftstoff 1 Wasser entzogen, und somit der Kraftstoff 1 getrocknet. Dadurch wird in gewünschter Weise die Schmierfähigkeit des Kraftstoffs 1 erhöht.

Sobald nun die Temperatur des Trockenmittels 2 die Regenerationstemperatur überschreitet, was typischerweise während der Fahrt bzw. länger laufendem Verbrennungsmotor 5 durch Erwärmung des Trockenmittels 2 über die Abgasleitung 26 der Fall ist, wird das Einlassventil 18 geschlossen, während das Auslassventil 19 geöffnet wird. Durch die über der Regenerationstemperatur des Trockenmittels 2 liegende Temperatur wird das im Trockenmittel 2 gespeicherte Wasser nunmehr wieder ausgedampft und kann über das Auslassventil 19 in die Umgebungsluft als Wasserdampf abgegeben werden. Durch die Abgabe des Wassers regeneriert sich das Trockenmittel 2, das heißt, es ist wieder zur Aufnahme von Feuchtigkeit fähig.

Beispielhaft sei erwähnt, dass bei einer Tankmenge von 40l Dieselkraftstoff ein Wassergehalt von 1 Vol% 400 Gramm Wasser entspricht. Wird nun im Vorratsbehälter 11 Silicagel in einer Menge von 500 Gramm gespeichert, so kann die Wassermenge in vier Aufnahme- bzw. Regenerationszyklen aus dem Dieselkraftstoff entfernt werden. Verwendet man anstatt Silicagel die gleiche Menge an Caliciumchlorid als Trockenmittel 2, so kann das Wasser in nur einem einzigen Zyklus entfernt werden.

Ergänzend wird erwähnt, dass es zur Beschleunigung der Aufnahme des Wassers durch das Trockenmittel 2, oder aber bei relativ langen Schlauchverbindungen 20 vorteilhaft sein kann, die Luft über dem Kraftstoff 1 gezielt dem Trockenmittel 2, zum Beispiel mittels einer Absaugeinrichtung, zuzuführen. Dadurch wird der Absorbtionsvorgang des Wassers durch das Trockenmittel 2 beschleunigt und verstärkt.

Ferner können anstatt eines elektrisch ansteuerbaren Einlassventils 18 und Auslassventils 19 auch solche Ventile verwendet werden, die ähnlich Kühlwasserthermostaten mechanisch selbstständig ab bestimmten Temperaturen öffnen bzw. schließen.

## Patentansprüche

1. Vorrichtung (10) zum Trocken von Kraftstoff (1), insbesondere für ein Kraftfahrzeug, mit einem Vorratsbehälter (11) für ein Trockenmittel (2), wobei das Trockenmittel (2) Feuchtigkeit bei Temperaturen unterhalb einer Regenerationstemperatur aufnimmt und bei Temperaturen oberhalb der Regenerationstemperatur wieder abgibt, mit einer Verbindung (20) zwischen dem Vorratsbehälter (11) und eine den Kraftstoff (1) speichernden Kraftstoffbehälter (22), **dadurch gekennzeichnet dass** über die Verbindung (20) die über dem Kraftstoff (1) befindliche Luft in Wirkverbindung mit dem Trockenmittel (2) gelangt, und mit einer Heizeinrichtung (25) zum Erwärmen des Trockenmittels (2) auf eine Temperatur oberhalb der Regenerationstemperatur.

2. Vorrichtung nach Anspruch 1,
**dadurch gekennzeichnet,**
**dass** der Vorratsbehälter (11) eine Eintrittsöffnung (12) aufweist, in der die Verbindung (20) mündet, und dass die Eintrittsöffnung (12) mit einem Einlassventil (18) verschließbar ist.

3. Vorrichtung nach Anspruch 2,
**dadurch gekennzeichnet,**
**dass** der Vorratsbehälter (11) eine Austrittsöffnung (13) aufweist, und dass die Austrittsöffnung (13) mit einem Auslassventil (19) verschließbar ist.

4. Vorrichtung nach einem der Ansprüche 1 bis 3,
**dadurch gekennzeichnet,**
**dass** die Heizeinrichtung (25) Teil einer Abgasleitung (26) eines Verbrennungsmotors (5) ist.

5. Vorrichtung nach Anspruch 4,
**dadurch gekennzeichnet,**
**dass** die Abgasleitung (26) in direktem Anlagekontakt mit dem Vorratsbehälter (11) angeordnet ist.

6. Vorrichtung nach einem der Ansprüche 3 bis 5,
**dadurch gekennzeichnet,**
**dass** das Einlassventil (18) bei Temperaturen unterhalb der Regenerationstemperatur als selbstständig offenes Ventil und das Auslassventil (19) bei Temperaturen unterhalb der Regenerationstemperatur als selbstständig geschlossenes Ventil ausgebildet ist.

7. Vorrichtung nach einem der Ansprüche 1 bis 6,
**dadurch gekennzeichnet,**
**dass** der Vorratsbehälter (11) nur teilweise mit dem Trockenmittel (2) befüllt ist, so dass im Vorratsbehälter (11) ein erster Freiraum (16) ohne Trockenmittel (2) ausgebildet ist.

8. Vorrichtung nach einem der Ansprüche 1 bis 7,
**dadurch gekennzeichnet,**
**dass** im Kraftstoffbehälter (22) oberhalb des Kraftstoffpegels (3) ein zweiter Freiraum (23) ausgebildet ist.

9. Verfahren zum Trocknen von Kraftstoff (1), insbesondere für ein Kraftfahrzeug, bei dem in einem Vorratsbehälter (11) ein Trockenmittel (2) gespeichert ist, das Feuchtigkeit unterhalb einer Regerationstemperatur insbesondere aus der Luft aufnimmt und bei Temperaturen oberhalb der Regenerationstemperatur wieder an die Umgebungsluft abgibt, wobei der Vorratsbehälter (11) mit einem den Kraftstoff (1) speichernden Kraftstoffbehälter (22) verbunden ist, derart, dass die oberhalb des Kraftstoffes (1) befindliche Luft in Wirkverbindung mit dem Trockenmittel (2) gelangt und **dadurch gekennzeichnet dass** eine Heizeinrichtung (25) vorgesehen ist, die das Trockenmittel (2) zur Regeneration des Trockenmittels (2) auf eine die Feuchtigkeit wieder an die Umgebungsluft abgebende Temperatur erwärmt.

10. Verfahren nach Anspruch 9,
**dadurch gekennzeichnet,**
**dass** in einer ersten Betriebsphase, bei der die Feuchtigkeit vom Trockenmittel (2) aufgenommen wird, ein in einer Verbindung (20) zwischen dem Vorratsbehälter (11) und dem Kraftstoffbehälter (22) geschaltetes Einlassventil (18) geöffnet ist, während ein den Vorratsbehälter (11) mit der Umgebungsluft verbindendes Auslassventil (19) geschlossen ist, und dass in einer zweiten Betriebsphase, bei der das Trockenmittel (2) die Feuchtigkeit wieder abgibt, das Einlassventil (18) geschlossen und das Auslassventil (19) geöffnet ist.

## Claims

1. Device (10) for drying fuel (1), in particular for a motor vehicle, having a storage reservoir (11) for a desiccant (2), wherein the desiccant (2) absorbs moisture at temperatures below a regeneration temperature and releases it again at temperatures above the regeneration temperature, having a connection (20) between the storage reservoir (11) and a fuel tank (22) which stores the fuel (1), **characterized in that** the air situated above the fuel (1) comes into operative connection with the desiccant (2) via the connection (20), and having a heating device (25) for heating the desiccant (2) to a temperature above the regeneration temperature.

2. Device according to Claim 1, **characterized in that** the storage reservoir (11) has an inlet opening (12) into which the connection (20) leads, and **in that** the inlet opening (12) can be closed by an inlet valve (18).

3. Device according to Claim 2, **characterized in that** the storage reservoir (11) has an outlet opening (13), and **in that** the outlet opening (13) can be closed by an outlet valve (19).

4. Device according to one of Claims 1 to 3, **characterized in that** the heating device (25) is part of an exhaust gas line (26) of a combustion engine (5).

5. Device according to Claim 4, **characterized in that** the exhaust gas line (26) is arranged in direct bearing contact with the storage reservoir (11).

6. Device according to one of Claims 3 to 5, **characterized in that** the inlet valve (18) is designed to be an automatically open valve at temperatures below the regeneration temperature and the outlet valve (19) is designed to be an automatically closed valve at temperatures below the regeneration temperature.

7. Device according to one of Claims 1 to 6, **characterized in that** the storage reservoir (11) is only partially filled with the desiccant (2) such that a first free space (16) without desiccant (2) is formed in the storage reservoir (11).

8. Device according to one of Claims 1 to 7, **characterized in that** a second free space (23) is formed in the fuel tank (22), above the fuel level (3).

9. Method for drying fuel (1), in particular for a motor vehicle, in which a desiccant (2) is stored in a storage reservoir (11), which desiccant absorbs moisture, in particular from the air, below a regeneration temperature and releases it again to the ambient air at temperatures above the regeneration temperature, wherein the storage reservoir (11) is connected to a fuel tank (22) which stores the fuel (1), in such a way that the air situated above the fuel (1) comes into operative connection with the desiccant (2) and **characterized in that** a heating device (25) is provided which, for the regeneration of the desiccant (2), heats the desiccant (2) to a temperature which releases the moisture again to the ambient air.

10. Method according to Claim 9, **characterized in that**, in a first operating phase in which the moisture is absorbed by the desiccant (2), an inlet valve (18) connected in a connection (20) between the storage reservoir (11) and the fuel tank (22) is opened, while an outlet valve (19) connecting the storage reservoir (11) to the ambient air is closed, and **in that**, in a second operating phase in which the desiccant (2) releases the moisture again, the inlet valve (18) is closed and the outlet valve (19) is opened.

## Revendications

1. Dispositif (10) d'assèchement de carburant (1), en particulier pour un véhicule automobile, comprenant un réservoir (11) pour un agent dessicatif (2), l'agent dessicatif (2) absorbant l'humidité à des températures en dessous d'une température de régénération et restituant à nouveau l'humidité à des températures au-dessus de la température de régénération, comprenant une liaison (20) entre le réservoir (11) et un réservoir de carburant (22) stockant le carburant (1), **caractérisé en ce que** l'air se trouvant au-dessus du carburant (1) parvient par le biais de la liaison (20) en liaison fonctionnelle avec l'agent dessicatif (2), et avec un dispositif de chauffage (25) pour chauffer l'agent dessicatif (2) à une température au-dessus de la température de régénération.

2. Dispositif selon la revendication 1,
**caractérisé en ce que**
le réservoir (11) présente une ouverture d'entrée (12) dans laquelle débouche la liaison (20), et **en ce que** l'ouverture d'entrée (12) peut être fermée avec une soupape d'admission (18).

3. Dispositif selon la revendication 2,
**caractérisé en ce que**
le réservoir (11) présente une ouverture de sortie (13) et **en ce que** l'ouverture de sortie (13) peut être fermée avec une soupape de sortie (19).

4. Dispositif selon l'une quelconque des revendications 1 à 3,
**caractérisé en ce que**
le dispositif de chauffage (25) fait partie d'une conduite de gaz d'échappement (26) d'un moteur à combustion interne (5).

5. Dispositif selon la revendication 4,
**caractérisé en ce que**
la conduite de gaz d'échappement (26) est disposée en contact d'application direct avec le réservoir (11).

6. Dispositif selon l'une quelconque des revendications 3 à 5,
**caractérisé en ce que**
la soupape d'admission (18) à des températures en dessous de la température de régénération est réalisée sous forme de soupape automatiquement ouverte et la soupape de sortie (19) à des températures en dessous de la température de régénération est réalisée sous forme de soupape automatiquement fermée.

7. Dispositif selon l'une quelconque des revendications 1 à 6,
**caractérisé en ce que**
le réservoir (11) n'est que partiellement rempli avec l'agent dessicatif (2) de telle sorte qu'un premier espace libre (16) sans agent dessicatif (2) soit réalisé dans le réservoir (11).

8. Dispositif selon l'une quelconque des revendications 1 à 7,
**caractérisé en ce**
**qu'**un deuxième espace libre (23) est réalisé dans le réservoir de carburant (22) au-dessus du niveau de carburant (3).

9. Procédé d'assèchement de carburant (1), en particulier pour un véhicule automobile, dans lequel un agent dessicatif (2) est stocké dans un réservoir (11), lequel absorbe l'humidité notamment de l'air en dessous d'une température de régénération et restitue à nouveau l'humidité à l'air ambiant à des températures au-dessus de la température de régénération, le réservoir (11) étant connecté à un réservoir de carburant (22) stockant le carburant (1), de telle sorte que l'air se trouvant au-dessus du carburant (1) parvienne en liaison fonctionnelle avec l'agent dessicatif (2), **caractérisé en ce qu'**il est prévu un dispositif de chauffage (25) qui chauffe l'agent dessicatif (2) pour la régénération de l'agent dessicatif (2) à une température restituant à nouveau l'humidité à l'air ambiant.

10. Procédé selon la revendication 9,
**caractérisé en ce que**
dans une première phase de fonctionnement à laquelle l'humidité est absorbée par l'agent dessicatif (2), une soupape d'entrée (18) montée dans une liaison (20) entre le réservoir (11) et le réservoir de carburant (22) est ouverte, tandis qu'une soupape de sortie (19) reliant le réservoir (11) à l'air ambiant est fermée, et **en ce que** dans une deuxième phase de fonctionnement à laquelle l'agent dessicatif (2) restitue à nouveau l'humidité, la soupape d'entrée (18) est fermée et la soupape de sortie (19) est ouverte.
